# EUROPÄISCHE PATENTSCHRIFT

(11) **EP 1 018 416 B1**
(45) Veröffentlichungstag und Bekanntmachung des Hinweises auf die Patenterteilung: **26.10.2005**
(21) Anmeldenummer: 99125706.4
(22) Anmeldetag: 23.12.1999
(51) Int. Cl.: B28C 1/18, B29B 7/64, B02C 4/40

(54) **Walzwerk für Rohstoffe für die keramische Industrie**
Roll mill for raw materials in the ceramic industry
Calandre pour matières premières dans l'indutrie de la céramique

(30) Priorität: 04.01.1999 DE 19900092; 07.06.1999 DE 19925814
(43) Veröffentlichungstag der Anmeldung: 12.07.2000
(73) Patentinhaber: HÄNDLE GmbH Maschinen und Anlagenbau, 75417 Mühlacker (DE)
(72) Erfinder: Gutjahr, Erwin, 75236 Kämpfelbach (DE)
(74) Vertreter: Twelmeier, Ulrich

(56) Entgegenhaltungen:
- EP-A- 0 694 375
- FR-A- 2 145 072
- PATENT ABSTRACTS OF JAPAN vol. 014, no. 446 (C-0763), 25. September 1990 (1990-09-25) & JP 02 174945 A (KAORU IWATA), 6. Juli 1990 (1990-07-06)

## Beschreibung

Die Erfindung geht von einem Walzwerk mit den im Oberbegriff des Anspruchs 1 angegebenen Merkmalen aus.

Aus der DE 43 36 708 A1 ist ein Walzwerk für das Aufbereiten von Tonen oder ähnlichen Rohstoffen mit waagerechten Walzen bekannt, die einen Walzspalt begrenzen, in welchem die Rohstoffe zwischen den Walzen gemahlen werden. Ein bindiger Rohstoff, wie es Ton ist, neigt dazu, an den Walzen zu haften. Deshalb ist jeder der Walzen an der Unterseite, in der Nähe des Walzspaltes, ein Schaber zugeordnet, welcher aus seiner Wirkstellung heraus um eine ortsfeste Achse um ungefähr 180° in eine Wartungsstellung verschwenkbar ist, in welcher der Schaber bzw. eine Schaberklinge ausgewechselt werden kann. Dazu sind Schwenkantriebe vorgesehen, welche nicht nur die Schwenkbewegung vollführen, sondern die Schaber in ihrer Wirkstellung auch gegen die Walzen drücken. Das geschieht mittels linearer hydraulischer Zylinder. So ist bei dem aus der DE 43 36 708 A1 bekannten Walzwerk zu beiden Seiten eines jeden Schabers ein linearer Hydraulikzylinder vorgesehen, welcher mit seinem einen Ende an der Innenseite des Seitenteils des Ständers angelenkt ist und mit seinem anderen Ende an einem Kurbelarm angelenkt ist, an welchem der Schaber befestigt ist. Der Kurbelarm ist ebenfalls an der Innenseite des Seitenteils des Ständers drehbar gelagert, und zwar an einer Stelle, die oberhalb des festen Anlenkpunktes des Hydraulikzylinders liegt und deren Abstand von der durch den Walzspalt gehenden senkrechten Ebene größer ist als der halbe Walzendurchmesser, so daß die Wartungsstellung des Schabers gut zugänglich ein gutes Stück vor der betreffenden Walze liegt. Der Kurbelarm und der daran angelenkte Hydraulikzylinder bilden einen Kurbeltrieb mit einem Totpunkt zwischen der Wirklage und der Wartungslage des Schabers. Um den Schaber über die Totpunktlage hinwegbewegen zu können, sind die einander paarweise gegenüberliegenden Druckmittelzylinder der beiden Schaber paarweise durch einen waagerechten, dritten Hydraulikzylinder miteinander gekoppelt. Das Bewegen der beiden Schaber erfolgt bei dem aus der DE 43 36 708 A1 bekannten Walzwerk durch ein System von sechs miteinander gekoppelten Hydraulikzylindern. Das ist aufwendig und störungsanfällig, zumal die Hydraulikzylinder durch die herabfallenden Rohstoffe leicht verschmutzen.

Bei einem aus der EP 0 694 375 A2 bekannten Walzwerk sind für das Verschwenken und Andrücken der beiden Schaber nur noch zwei lineare Druckmittelzylinder vorgesehen, welche mittig am Schaber angreifen und demgemäß nicht an den Seitenteilen des Ständers des Walzwerks angelenkt sind, sondern an einer Quertraverse des Ständers unterhalb der Wartungsstellung der Schaberklinge. Das führt zwar im Vergleich zu dem aus der DE 43 36 708 A1 bekannten Walzwerk zu einer Einsparung von drei Hydraulikzylindern und zu geringerer Verschmutzungsgefahr, erkauft dies jedoch durch hinsichtlich des Andrückens der Schaber an die Walzen ungünstige Hebelverhältnisse und durch eine aufwendige Linearführung für den Schaber, um diesen mit einer kombinierten Linear- und Schwenkbewegung zwischen Wirk- und Wartungsstellung verlagern zu können.

Aus der JP-A-2174945 ist ein Walzwerk mit den gegenständlichen Merkmalen des Oberbegriffs des Anspruchs 1 bekannt. Dieses Walzwerk hat Schaber, die mittels linearer Druckmittelzylinder aus ihrer Wirkstellung herausgeschwenkt werden können. Dabei kann jedoch eine bequem zugängliche Wartungsstellung auf der vom Walzspalt entfernten Außenseite nicht erreicht werden, weil der dafür erforderliche Schwenkwinkel und Schwenkradius nicht gegeben sind. Ein geringer Schwenkradius ist für die Wirksamkeit des Schabers günstig, weil er dem Auftreten von Schwingungen entgegenwirkt. Ein Austausch der Schaberklinge gestaltet sich deshalb mühsam.

Der vorliegenden Erfindung liegt die **Aufgabe** zugrunde, eine möglichst einfache Möglichkeit aufzuzeigen, die Schaber zu montieren gegen die Walzen zu drücken und zwischen ihrer Wirklage- und einer gut zugänglichen Wartungslage zu verlagern. Dabei soll die Neigung zum Auftreten von Schwingungen gering sein.

Zur Lösung dieser Aufgabe schlägt die Erfindung ein Walzwerk mit den im Anspruch 1 angegebenen Merkmalen vor. Vorteilhafte Weiterbildungen der Erfindung sind Gegenstand der Unteransprüche.

Erfindungsgemäß ist jeder Schaber mittels Armen an einer Welle befestigt, welche in den Seitenteilen drehbar gelagert ist. An der Außenseite des einen oder des anderen Seitenteils des Ständers vorgesehene Schwenkantriebe und betätigt von dort aus den mit ihm verbundenen Schaber.

Um trotz eines Abstandes zwischen der Spitze des Schabers und seiner Schwenkachse, der wegen der Anbringung der Schaber an Armen groß genug ist, um den Schaber in eine gut zugängliche Wartungsstellung zu überführen, Schwingungen des Schabers in seiner Wirkstellung wirksam zu begegnen, sind erfindungsgemäß Maßnahmen vorgesehen. Der Schaber ist so ausgebildet, daß er eine auswechselbar in einer Halterung eingespannte Klinge aufweist. Diese Klinge kann, wenn sie verschlissen ist, in der Wartungsstellung des Schabers ausgewechselt werden. Um den Verschleiß in vertretbaren Grenzen zu halten, besteht die Schaberklinge aus Stahl. Die Halterung, in welche die Klinge eingespannt ist, besteht gemäß der Erfindung nicht aus Stahl, sondern aus einem Leichtmetall, um die schwingfähige Schabermasse zu verkleinem. Außerdem ist die Halterung für die Schaberklinge als Hohlkammerprofil ausgebildet ist, um auch für die Halterung eine optimale Kombination von geringer Masse mit hoher Steifigkeit zu erzielen. Das hat Vorteile für das Schwingungsverhalten des Schabers. Die Eigenfrequenz der Schwingung, zu welcher der Schaber in seiner Wirkstellung angeregt werden kann, ist um so größer, je kleiner die Masse des Schabers ist. Je höher die Eigenfrequenz der Schwingungen ist, die unvermeidlich auftreten, desto kürzer sind die Zeitspannen, in denen der Schaber von seiner Walze abheben kann.

Vorteilhaft ist es ferner, wenn auch die Arme aus Leichtmetall, insbesondere aus einem Profilmaterial bestehen, welches im parallel zur Welle gelegten Querschnitt eine I -Form oder eine [-Form hat, wobei der Mittelsteg des I bzw. des [ quer zur Längsrichtung der Welle verläuft. Mit solchen Querschnittsformen erreicht man trotz geringer Masse eine hohe Biegesteifigkeit.

Die Erfindung hat noch weitere wesentliche Vorteile:
◆ Der Raum unter den Walzen ist weitestgehend frei von Einbauten. Die Schwenkbewegung der Schaber wird nicht behindert.
◆ Die Schwenkantriebe befinden sich nicht unter den Walzen, sondern an der Außenseite des Ständers und sind dadurch vor Verschmutzung durch die gemahlenen Rohstoffe geschützt.
◆ Für jeden Schaber wird nur ein einziger Antrieb benötigt.
◆ Die Verwendung nur eines einzigen, außenseitig angeordneten Antriebes für jeden Schaber hat kein Verwinden des Schabers zur Folge, weil die Antriebskräfte und insbesondere die Andrückkräfte in der Wirkstellung des Schabers von der Welle gleichmäßig auf die Arme und von diesen auf die steife Halterung des Schabers und schließlich auf dessen Klinge übertragen werden.
◆ Eine Verschmutzung der Welle behindert die Funktion des Schabers nicht.
◆ Die Schaber können einzeln, unabhängig voneinander, betätigt werden.
◆ Der konstruktive Aufbau der Schaberanordnung ist außerordentlich einfach.

Als Drehantrieb eignet sich besonders ein elektrischer Servomotor, welcher gemäß seiner Bauart den Schaber nicht nur verschwenken, sondern in seinen beiden Endlagen, in der Wirkstellung und in der Wartungsstellung, festhalten und in der Wirkstellung den nötigen Andruck des Schabers an der Walze gewährleisten kann. Da der Servomotor die Sollage, die man ihm vorgibt, selbsttätig einregelt und aktiv beizubehalten sucht, ist ein solcher Servomotor auch ein geeignetes Mittel, um unerwünschte Schwingungen des Schabers in seiner Wirkstellung zu verhindern.

Besonders bevorzugt ist die Verwendung eines hydraulischen Drehantriebs. Ein Hydraulikaggregat ist bei Walzwerken der hier in Rede stehenden Art üblicherweise ohnehin vorgesehen. Der hydraulische Drehantrieb eignet sich besonders, um die Andrückkraft des Schabers an seiner Walze auf Dauer sicherzustellen. Das könnte mittels eines auf der Außenseite des Ständers angeordneten Linearzylinders erfolgen, welcher auf einen drehfest mit der Welle verbundenen Exzenter einwirkt. Vorzugsweise wird die Welle jedoch mittels eines kompakten hydraulischen Drehflügelzylinders oder mittels eines hydraulischen Schwenkmotors angetrieben, welcher koaxial zur Welle angeordnet ist und diese vorzugsweise direkt, ohne Untersetzung oder Übersetzung antreibt. Unter einem hydraulischen Schwenkmotor wird hier ein Schwenkantrieb verstanden, welcher einen hydraulischen Linearzylinder mit einem Kolben aufweist, welcher auf seiner Außenseite einen mit einem Steilgewinde versehenen Abschnitt hat, in welches ein am Gehäuse des Linearzylinders fest ausgebildetes Gegengewinde eingreift. Wird der Kolben mit Druck beaufschlagt und verschoben, verdreht er sich durch den Gewindeeingriff und überträgt diese Drehung auf eine ihn durchsetzende Welle. Der hydraulische Schwenkmotor kann intern auch mit einer Übersetzung versehen sein, und zwar dergestalt, daß die Welle mit einem weiteren Steilgewinde versehen ist, welches den entgegengesetzten Windungssinn hat wie das Steilgewinde auf der Außenseite des Kolbens und im Eingriff steht mit einem Gegengewinde auf der Kolbeninnenseite. Durch die Kombination von zwei solchen gegenläufigen Steilgewindepaaren kann man verglichen mit nur einem einzigen Steilgewindepaar eine doppelt so große Winkelbewegung der Welle erzielen. Solche Schwenkmotoren haben gegenüber hydraulischen Drehflügelzylindem den Vorteil, daß sie wegen der linearen Kolbenausbildung geringere Leckverluste haben. Solche Schwenkmotoren werden z.B. von der Firma Eckart GmbH Hydraulik-Preumatik in D - 36381 Schlüchtern unter der Bezeichnung SM4 angeboten.

Die Welle, auf welcher der Schaber befestigt ist, ist vorzugsweise als Hohlwelle ausgebildet, in welche eine Stange eingeführt ist, die zur Drehmomentübertragung einerseits in einem formschlüssigen Eingriff mit der Welle und andererseits in Antriebsverbindung mit dem betreffenden Schwenk- oder Drehantrieb steht. Das hat den Vorteil, daß das Drehmoment gezielt in der Mitte der Hohlwelle übertragen werden kann, so daß eine Verwindung der Hohlwelle mit der Folge einer Verwindung des Schabers ausgeschlossen ist. Die für die Drehmomentübertragung vorgesehene Formschlußverbindung zwischen Stange und Welle kann dadurch bewirkt werden, daß Stange und Welle an der vorgesehenen mittleren Stelle durch einen oder mehrere radial verlaufende Splinte miteinander verbunden sind, oder dadurch, daß der Querschnitt der Stange und der lichte Querschnitt der Welle in dem gewünschten mittleren Bereich kantig ausgebildet sind. Vorzugsweise sind jedoch die Welle und die Stange im wesentlichen, d.h. auf dem überwiegenden Teil ihrer Länge, hohlzylindrisch bzw. zylindrisch ausgebildet und die Welle ist mittig geteilt und dort mit Flanschen zum gegenseitigen Verbinden versehen. An dieser mittigen Verbindungsstelle hat die Stange einen unrunden, insbesondere abgeflachten, kantigen Querschnitt und von dem einen und/oder dem anderen Flansch erstreckt sich ein gegen den unrunden Abschnitt der Stange gerichteter Fortsatz in das Innere der hohlen Welle, so daß die Stange mit ihrem abgeflachten Abschnitt zur Drehmomentübertragung an diesem Fortsatz anliegt. Durch die Teilung der hohlen Welle läßt sich dieses leicht verwirklichen, ohne im übrigen von den kreisrunden Querschnittsformen abweichen zu müssen.

Die Schwenkachse des Schabers liegt ungefähr in der Mitte zwischen der Wirkstellung und der Wartungsstellung des Schabers. Je größer die Entfernung der Spitze des Schabers von seiner Schwenkachse ist, desto besser ist der Schaber in der Wartungsstellung zugänglich. Nun kann diese Entfernung schon deshalb nicht beliebig groß gemacht werden, weil der Schwenkbereich, der im Walzwerk unter den Walzen zur Verfügung steht, nicht beliebig groß ist. Außerdem neigen die Schaber in ihrer Wirkstellung um so eher zum Schwingen, je größer der Abstand zwischen der Spitze des Schabers und der Schwenkachse ist. Im Stand der Technik begegnet man dem teilweise dadurch, daß man den Angriffspunkt von Hydraulikzylindern, die den Schaber andrücken, möglichst nahe an dessen Spitze heranrücken läßt. Im Rahmen der vorliegenden Erfindung besteht diese Möglichkeit nicht. Um die Neigung zum Schwingen zu verringern, kann bei der erfindungsgemäßen Lösung der Abstand zwischen der Achse und der Spitze des Schabers aber auch nicht beliebig klein gemacht werden, denn dann wäre der Schaber in seiner Wartungsstellung nicht mehr leicht zugänglich.

Das erfindungsgemäße Anbringen der Schaber an einer Welle, welche von der Außenseite des Ständers her angetrieben wird, ermöglicht eine vorteilhafte Weiterbildung der Erfindung dahingehend, daß die Wellen für die beiden Schaber in ihrer Längsrichtung verschieblich gelagert und mit einem Verschiebeantrieb verbunden sind, durch den sie längs hin- und hergehend verschiebbar sind. Die hin- und hergehenden Wellen nehmen die Schaber mit. Eine hin- und hergehende Bewegung der Schaber ist geeignet, den Verschleiß sowohl an den Walzen als auch an den Schabern zu verringern. Kleine Steine und andere harte Bestandteile, welche in den zu mahlenden Rohstoffen enthalten sein können, werden bei hin- und hergehenden Schabern nicht so leicht zwischen Walze und Schaberklinge eingeklemmt. Kommt es bei stillstehendem Schaber zu einem solchen Einklemmen eines harten Gegenstandes, dann erzeugt dieser in der Walzenoberfläche Riefen, die mit jeder Umdrehung tiefer werden, weil der eingeklemmte Gegenstand an seiner Stelle verharrt. Es kann auch zu einer Beschädigung der Schaberklinge kommen, die ihrerseits dann wieder Riefen in der Walzenoberfläche hinterläßt. Bei hin- und hergehender Schaberklinge jedoch kommt es nicht so leicht zu einem Einklemmen von Steinchen, diese werden vielmehr durch die hin- und hergehende Bewegung leichter abgeführt und ein dennoch auftretender Verschleiß verteilt sich durch die hin- und hergehende Bewegung über eine gewisse Länge der Walzen und führt nicht zu so tiefen Riefen, wie sie bei stillstehendem Schaber auftreten können.

Der Vorteil ist, das die Walzen nicht so häufig nachgeschliffen werden müssen und das die Schaberklingen nicht so häufig ausgewechselt werden müssen.

Der Verschiebeantrieb für die Welle des jeweiligen Schabers ist an der Außenseite jenes Seitenteils des Ständers angebracht, an welchem der Schwenkantrieb für die betreffende Welle nicht angebracht ist. Dadurch, daß erfindungsgemäß für jede Welle nur ein einziger Antrieb auf einer Seite des Ständers benötigt wird, steht das andere Seitenteil für einen Verschiebeantrieb für die jeweilige Welle ohne weiteres zur Verfügung.

Grundsätzlich könnte man für die beiden Wellen einen gemeinsamen Verschiebeantrieb vorsehen. Konstruktiv ist es jedoch einfacher und für das Betreiben des Walzwerkes günstiger, wenn jede Welle ihren eigenen Verschiebeantrieb hat. Zu diesem Zweck hat der jeweilige Verschiebeantrieb vorzugsweise eine drehbare Schubstange, welche koaxial zur Welle verläuft und mit der Welle z.B. durch eine Flauschverbindung drehfest und schub- und zugfest verbunden ist.

Als Verschiebeantrieb eignet sich besonders eine druckmittelbetätigte Kolben - Zylinder - Einheit, insbesondere ein Hydraulikzylinder, dessen Kolbenstange die Schubstange ist, welche mit der betreffenden Welle drehfest und schub- und zugfest verbunden ist. Eine druckmittelbetätigte Kolben - Zylinder - Einheit eignet sich besonders, weil für den Betrieb eines erfindungsgemäßen Walzwerkes üblicherweise ohnehin ein Hydraulikaggregat vorgesehen ist und weil der Kolben einer Kolben - Zylinder - Einheit beim Verschwenken der Schaberanordnung ohne weiteres mitgedreht werden kann. Außerdem ist die Verwendung einer druckmittelbetätigten Kolben - Zylinder - Einheit vorteilhaft, weil sie an die gewünschte Verschiebelänge leicht angepaßt werden kann und ohne Schwierigkeit genügend Kraft entwickelt. Vorzugsweise wird die jeweilige Welle nur um einige Zentimeter verschoben, so daß zweckmäßigerweise ein Hydraulikzylinder mit kurzem, nur einige Zentimeter betragendem Hub verwendet wird.

Weiter vorne wurde erläutert, daß die Welle vorzugsweise eine hohle Welle ist und ihr Schwenkantrieb mittels einer Stange, welche in die hohle Welle eingeführt ist, die hohle Welle dreht, wobei die Drehmomentübertragung zwischen der Stange und der hohlen Welle vorzugsweise in der Mitte der hohlen Wellen erfolgt und dort die Stange fest mit der hohlen Welle verbunden ist. Um auch in diesem Fall die hohle Welle hin- und hergehend verschieben zu können, ist in vorteilhafter Weiterbildung der Erfindung vorgesehen, daß die Stange außerhalb der hohlen Welle, zwischen der hohlen Welle und dem Verschwenkantrieb, quergeteilt ist und ihre beiden Teile durch eine drehstarre Ausgleichskupplung verbunden sind, welche eine Axialverlagerung der beiden Teile relativ zueinander erlaubt. Als Ausgleichskupplung eignet sich besonders eine Bogenzahnkupplung.

Eine solche Kupplung kann auch dann vorgesehen sein, wenn die Welle nicht mittels einer in sie eingreifenden Stange, sondern direkt vom Schwenkantrieb gedreht wird. Einer solchen Kupplung bedarf es nicht, wenn die Stange auf einem Teil ihrer Länge ein kantiges Profil hat und die hohle Welle ein dazu passendes Innenprofil hat, in welchem die Stange gleiten kann.

Zwei Ausführungsbeispiele der Erfindung sind schematisch in den beigefügten Zeichnungen dargestellt.
- Figur 1: zeigt ein Walzwerk in einer Ansicht rechtwinklig zu den Seitenteilen des Ständers, wobei ein Seitenteil entfernt wurde, um die Anord- nung der Schaber sichtbar zu machen,
- Figur 2: zeigt einen in die Achse der Welle gelegten Vertikalschnitt mit einer Ansicht der für das Verständnis der Erfindung wesentlichen Elemen- te, wobei die Walzen weggelassen sind,
- Figur 3: zeigt eine abgewandelte Ausführungsform der Erfindung, bei wel- cher die Schaber hin- und hergehend angetrieben sind, in einer der Figur 2 entsprechenden Darstellung, und
- Figur 4: zeigt in gegenüber Figur 3 vergrößertem Maßstab als Detail die An- ordnung einer Bogenzahnkupplung in einer die Welle drehenden Stange.

In den beiden Ausführungsbeispielen sind gleiche und einander entsprechende Teile mit übereinstimmenden Bezugszahlen bezeichnet.

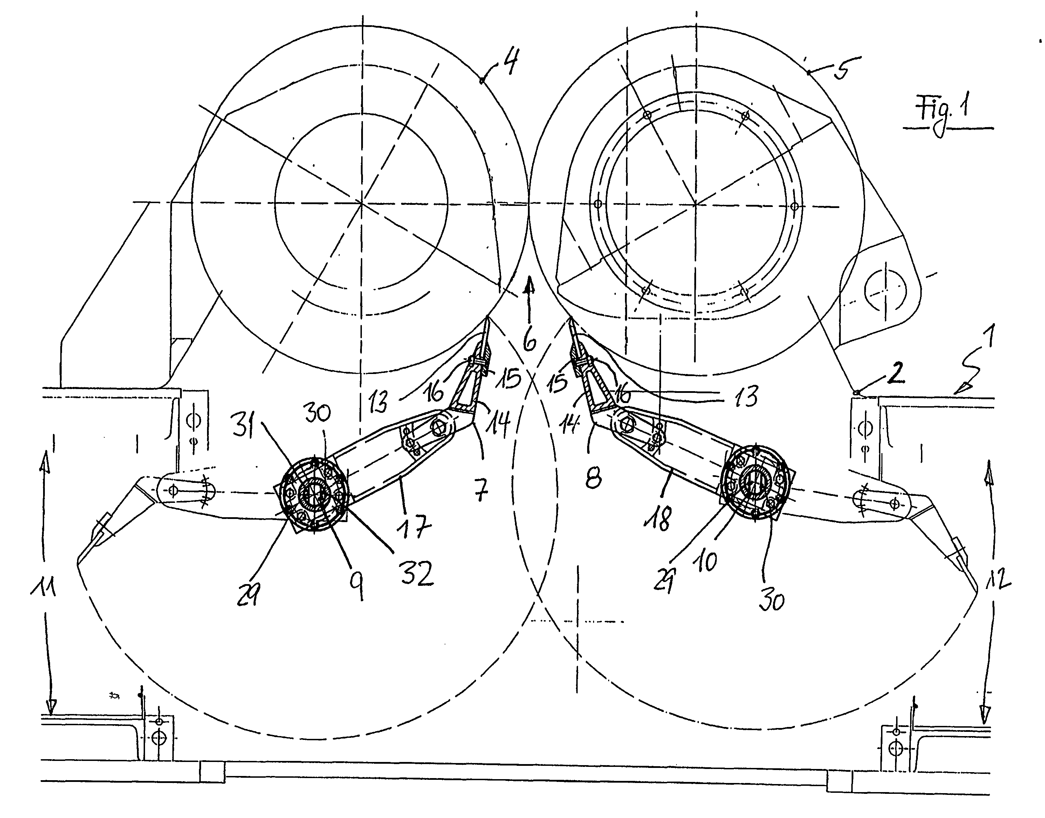

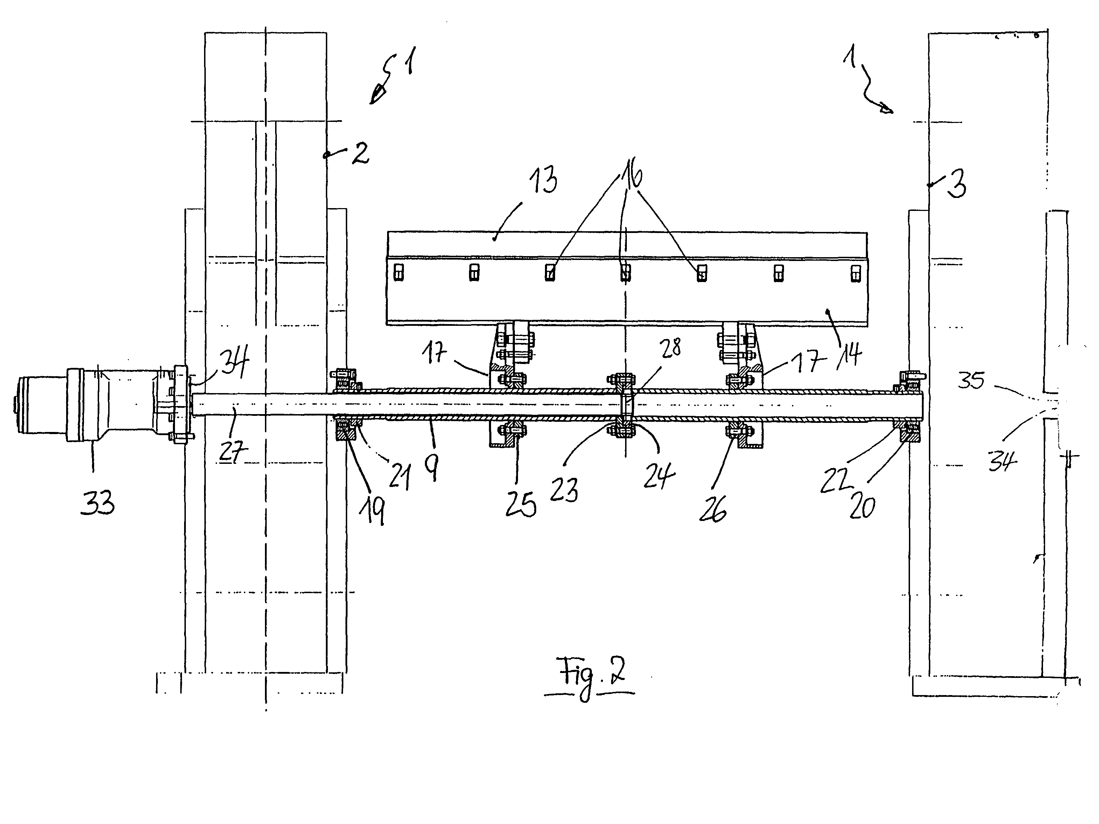

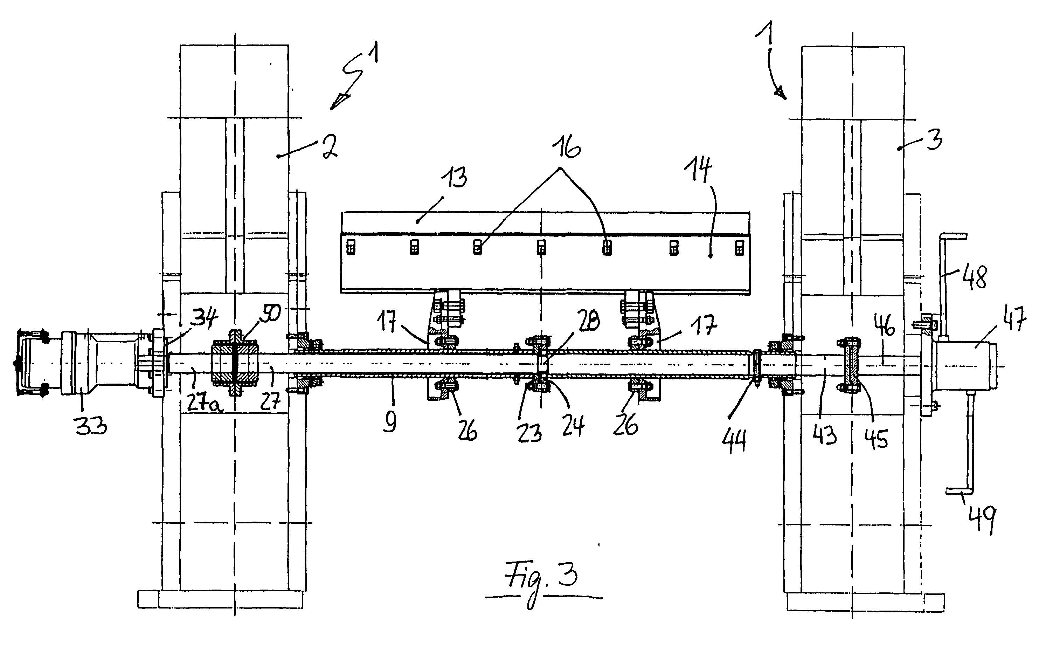

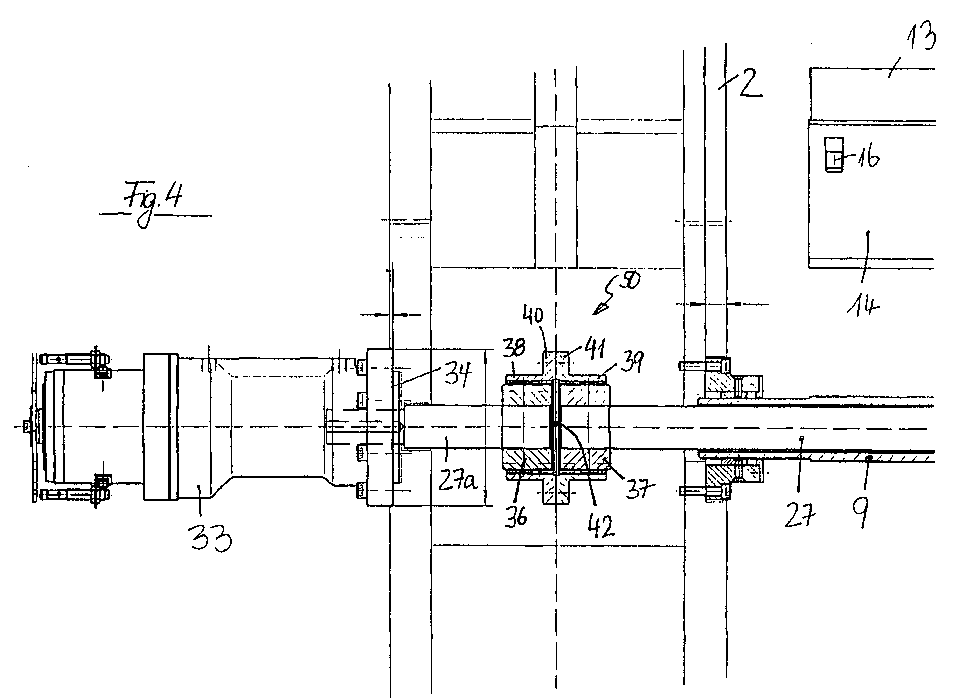

Das in den Figuren 1 und 2 dargestellte Walzwerk hat einen Ständer 1, in dessen Seitenteilen 2 und 3 zwei Walzen 4 und 5 gelagert sind, die einen Walzspalt 6 begrenzen. Unter den Walzen sind zwei Schaber 7 und 8 angeordnet, welche in ihrer Wirkstellung dem Mantel der Walze 4 bzw. 5 anliegen. Jeder Schaber ist um eine Welle 9 bzw. 10 verschwenkbar, welche parallel zu den Walzen 4 und 5 verläuft, und zwar in einem Abstand von der durch den Walzspalt 6 gelegten senkrechten Ebene, der größer ist als der halbe Durchmesser der Walzen. Auf diese Weise kann der Schaber 7, 8 mit seiner Spitze in eine gut zugängliche Wartungsstellung hinter einem Fenster 11, 12 verschwenkt werden, um die Schaberklinge 13 auswechseln zu können. Die Schaberklinge 13 besteht aus einem verschleißfesten Stahl und ist an einer Halterung 14, welche aus einem Aluminiumwerkstoff besteht und als Hohlkammerprofil ausgebildet ist, festgeklemmt, und zwar mittels einer Klemmleiste 15, welche durch eine Anzahl von Schrauben 16 mit der Halterung 14 verschraubt ist.

Die Halterung 14 ihrerseits ist jeweils mit einem Arm 17 bzw. 18 verschraubt, welcher radial von der Welle 9 bzw. 10 absteht und drehfest auf dieser befestigt ist. Bei den Armen handelt es sich um biegesteife I -Profile aus einem Aluminiumwerkstoff. Um einen optimalen Anstellwinkel der Klinge 13 an der Walze 4, 5 zu erhalten, ist die Halterung 14 wie in Figur 1 dargestellt abgewinkelt ausgebildet. Zur Justierung des Anstellwinkels kann die Halterung 14 in drei verschiedenen Winkelstellungen mit dem Arm 17, 18 verschraubt werden (Figur 1).

Wie man in Figur 2 sieht, sind die übereinstimmend ausgebildeten Wellen 9, 10 als Hohlwellen ausgebildet und in den beiden Seitenteilen 2 und 3 des Ständers drehbar in Kugellagern 19, 20 gelagert und durch an die Kugellager angrenzende Sicherungsringe 21 und 22 gegen axiales Verschieben gesichert. Die Hohlwelle 9, 10 ist in der Mitte geteilt, dort mit zwei Flanschen 23 und 24 versehen und mit deren Hilfe zu einer Einheit verschraubt. Auf jede Hälfte der Hohlwelle 9, 10 ist ein Montagering 25, 26 aufgeschweißt, mit welchem die Arme 17, 18 verschraubt sind.

Von einem Ende her ist in die Hohlwelle 9, 10 eine Stange 27 eingeführt, deren im Bereich der Flansche 23, 24 liegender Endabschnitt 28 unter Bildung von zwei zueinander parallelen Flächen 29, 30 abgeflacht ist. Der eine Flansch 24 hat zwei dazu passende, einander gegenüberliegende Vorsprünge 31 und 32, welche gegen die Flächen 29 und 30 gerichtet sind und an ihnen nahezu spielfrei anschlagen. Auf diese Weise besteht eine formschlüssige, verdrehfeste Verbindung zwischen der Stange 27 und der Hohlwelle 9, 10, so daß ein auf die Stange 27 ausgeübtes Drehmoment mittig auf die Hohlwelle 9 bzw. übertragen wird.

Dieses Drehmoment stammt von einem hydraulischen Drehflügelzylinder 33, welcher an der Außenseite des einen Seitenteils 2 koaxial zur Stange 27 angeordnet und direkt mit dieser verbunden ist, wozu die Stange 27 über die Hohlwelle 9, 10 hinaus bis in den Drehflügelzylinder 33 hinein verlängert ist. Der hydraulische Drehflügelzylinder erbringt zum einen den erforderlichen Andruck der Schaberklinge 13 an der jeweiligen Walze und ermöglicht andererseits die Verschwenkung des betreffenden Schabers 7, 8 zwischen seiner Wirkstellung und seiner Wartungsstellung.

Wegen des in Bezug auf die Seitenteile 2 und 3 des Ständers symmetrischen Aufbaus kann die Stange 27 nach Wahl von dem einen Seitenteil 2 aus oder von dem anderen Seitenteil 3 aus in die Hohlwelle 9, 10 gesteckt werden. Ebenso kann der Drehflügelzylinder 33 nach Wahl am einen Seitenteil 2 oder am anderen Seitenteil 3 angebracht werden. Die dafür vorgesehene Öffnung 34 wird am freibleibenden Seitenteil 3 durch einen Deckel 35 verschlossen.

Als Schwenkantrieb 33 kann anstelle eines hydraulischen Drehflügelzylinders auch ein hydraulischer Schwenkmotor eingesetzt werden, welcher mit einer linearen hydraulischen Kolben-Zylinder-Anordnung arbeitet. Der Aufbau der Schaberanordnung im Walzwerk ändert sich dadurch nicht.

Das in den Figuren 3 und 4 dargestellte zweite Ausführungsbeispiel der Erfindung stimmt mit dem ersten Ausführungsbeispiel weitgehend überein. Der Unterschied zwischen den beiden Ausführungsbeispielen besteht darin, daß die beiden zweigeteilten Wellen 9 und 10 nicht nur schwenkbar, sondern auch in Richtung ihrer Längsachse hin- und hergehend verschiebbar sind. Wie das gelöst wird, ist in den Figuren 3 und 4 am Beispiel der Welle 9 dargestellt. Für die Welle 10 gilt entsprechendes.

In dem zweiten Ausführungsbeispiel ist die Verbindung zwischen der Welle 9 und der Stange 27 auf gleiche Weise verwirklicht wie im ersten Ausführungsbeispiel.

Die hin- und hergehende Welle 9 nimmt die Stange 27 mit. Um dies zu ermöglichen, ist die Stange in zwei Abschnitte 27 und 27a quer geteilt. Auf den beiden benachbarten Enden der Stangen 27 und 27a sind drehfest und zugfest zwei Zahnräder 36 und 37 befestigt, welche jeweils in einer Hülse 38, 39 stecken, die auf ihrer Innenseite eine dazu passende Verzahnung hat. Die Hülsen 38, 39 liegen mit Flanschen 40, 41 aneinander an und sind an den Flanschen miteinander verschraubt, wobei sie ein Blech 42 zwischen sich einspannen, welches sicherstellt, daß die Hülsen 38 und 39 im Übergangsbereich von der Stange 27 zur Stange 27a bleiben. Die Zahnräder 36 und 37, die Hülsen 38 und 39 und das Blech 42 bilden zusammen eine Bogenzahnkupplung 50. Eine Bogenzahnkupplung ist eine Ausgleichskupplung, welche eine Längsverschiebung der beiden Stangen 27 und 27a relativ zueinander ermöglicht. Der Name Bogenzahnkupplung bringt zum Ausdruck, daß die Zähne eine dem Fachmann bekannte bogenförmige Gestalt haben, welche für ein gewisses radiales Spiel sorgt.

Um eine Verschiebebewegung zu bewirken, ist in das andere Ende der hohlen Welle 9 eine Stange 43 gesteckt und durch einen quer verlaufenden Splint 44 drehfest und zugfest mit der hohlen Welle 9 verbunden. Die Stange 43 ist mittels einer Flanschverbindung 45 mit der Kolbenstange 46 eines Hydraulikzylinders 47 verbunden, welcher auf der Außenseite des Seitenteils 3 des Ständers 1 befestigt ist. Der Hydraulikzylinder 47 ist ein doppelt wirkender Zylinder mit kurzem Hub. Zur Vorderseite seines Kolbens führt eine Hydraulikleitung 48, zur Rückseite eine Hydraulikleitung 49. Der maximale Hub des Hydraulikzylinders 47 ist so gewählt, daß sich die Enden der beiden Stangen 27 und 27a ein kurzes Stück, vorzugsweise 2 cm bis 3 cm, voneinander entfernen, jedoch nicht aus der Ausgleichskupplung 50 herausgleiten können. Der Hydraulikzylinder 47 wird so betätigt, daß er die Welle 9 um seinen maximalen Hub periodisch hin- und hergehend verschiebt.

### Bezugszahlen

- 1: Ständer
- 2, 3: Seitenteil
- 4, 5: Walze
- 6: Walzspalt
- 7, 8: Schaber
- 9, 10: Welle
- 11, 12: Fenster
- 13: Klinge
- 14: Halterung
- 15: Klemmleiste
- 16: Schrauben
- 17, 18: Arm
- 19, 20: Kugellager
- 21, 22: Sicherungsring
- 23, 24: Flansch
- 25, 26: Montagering
- 27, 27a: Stange
- 28: abgeflachter Abschnitt
- 29, 30: Fläche
- 31, 32: Vorsprung
- 33: Drehflügelzylinder
- 34: Öffnung
- 35: Deckel
- 36, 37: Zahnrad
- 38, 39: Hülse
- 40, 41: Flansch
- 42: Blech
- 43: Stange
- 44: Splint
- 45: Flanschverbindung
- 46: Kolbenstange
- 47: Hydraulikzylinder
- 48, 49: Hydraulikleitung
- 50: Ausgleichskupplung

## Patentansprüche

1. Walzwerk für Rohstoffe für die keramische Industrie mit zwei einen Walzspalt (6) begrenzenden Walzen (4, 5), welche mit waagerechter Drehachse in Seitenteilen (2, 3) eines Ständers (1) gelagert sind,
und mit zwei unter den Walzen (4, 5) angeordneten Schabern (7, 8), welche um Wellen (9, 10) um eine unter der zugeordneten Walze liegende waagerechte Achse (13) schwenkbar in den Seitenteilen (2, 3) gelagert sind und von denen je ein Schaber (7, 8) einer der beiden Walzen (4, 5) zugeordnet ist, ihrem Mantel in seiner Wirkstellung anliegt und aus seiner Wirkstellung in eine Wartungsstellung schwenkbar ist, wozu an der Außenseite des einen oder des anderen Seitenteils (2, 3) in Antriebsverbindung mit den Wellen Schwenkantriebe (33) vorgesehen sind, welche zwischen den Schabern (7, 8) und dem Ständer (1) wirksam sind und die Schaber (7, 8) in ihrer Wirkstellung gegen die Walzen (4, 5) drücken, wobei die Schaber (7, 8) eine auswechselbar in einer Halterung (14) eingespannte Klinge (13) aus Stahl aufweisen,
**dadurch gekennzeichnet, daß** die Halterungen (14) mit Armen (17, 18) an den Wellen (9, 10) angebracht sind, aus Leichtmetall bestehen und mit Hilfe eines Hohlkammerprofils gebildet sind.

2. Walzwerk nach Anspruch 1, **dadurch gekennzeichnet, daß** der Schwenkantrieb (33) einen elektrischen Servomotor beinhaltet.

3. Walzwerk nach Anspruch 1, **dadurch gekennzeichnet, daß** der Schwenkantrieb (33) einen hydraulischen Drehflügelzylinder beinhaltet.

4. Walzwerk nach Anspruch 1, **dadurch gekennzeichnet, daß** der Schwenkantrieb (33) ein hydraulischer Schwenkmotor ist, welcher einen hydraulischen Linearzylinder mit einem Kolben aufweist, welcher einen mit einem Steilgewinde versehenen Abschnitt hat in welches ein am Gehäuse des Linearzylinders fest ausgebildetes Gegengewinde eingreift

5. Walzwerk nach Anspruch 2, 3 oder 4, **dadurch gekennzeichnet, daß** der Schwenkantrieb (33) die Welle (9, 10) direkt antreibt.

6. Walzwerk nach einem der vorstehenden Ansprüche, **dadurch gekennzeichnet, daß** die Welle (9, 10) eine Hohlwelle ist, in welche eine Stange (27) eingeführt ist, welche zur Drehmomentübertragung in einem formschlüssigen Eingriff mit der Welle (9, 10) steht, und daß die Stange (27) in Antriebsverbindung mit dem betreffenden Schwenkantrieb (33) steht.

7. Walzwerk nach Anspruch 6, **dadurch gekennzeichnet, daß** die Welle (9, 10) hohlzylindrisch ausgebildet, mittig geteilt und dort mit Flanschen (23, 24) zum gegenseitigen Verbinden versehen ist,
daß die Stange (27) an ihrem im Bereich der Flansche (23, 24) liegenden Abschnitt (28) im Querschnitt unrund, insbesondere abgeflacht ist,
und daß von dem einen (24) und/oder dem anderen Flansch ein gegen den unrunden Abschnitt der Stange (27) gerichteter Vorsprung (31, 32) in das Innere der Hohlwelle (9, 10) ragt.

8. Walzwerk nach einem der vorstehenden Ansprüche, **dadurch gekennzeichnet, daß** die Arme (17, 18) aus einem Leichtmetall bestehen.

9. Walzwerk nach Anspruch 8, **dadurch gekennzeichnet, daß** die Arme (17, 18) aus einem Profilmaterial bestehen, welches im parallel zur Welle (9, 10) gelegten Querschnitt I -Form oder [-Form hat, wobei der Mittelsteg des I bzw. [quer zur Längsrichtung der Welle (9, 10) verläuft.

10. Walzwerk nach einem der vorstehenden Ansprüche, **dadurch gekennzeichnet, daß** die Halterung (14) einen zwischen 90° und 180° betragenden Winkel mit den Armen (17, 18) einschließt.

11. Walzwerk nach einem der vorstehenden Ansprüche, **dadurch gekennzeichnet, daß** die Wellen (9, 10) in ihrer Längsrichtung verschieblich gelagert und mit einem Verschiebeantrieb (47) verbunden sind, durch den sie (längs hin- und hergehend) verschiebbar sind.

12. Walzwerk nach Anspruch 11, **dadurch gekennzeichnet, daß** der Verschiebeantrieb (47) an der Außenseite jenes Seitenteils (3) angebracht ist, an welchem der Schwenkantrieb (33) nicht angebracht ist.

13. Walzwerk nach Anspruch 11 oder 12, **dadurch gekennzeichnet, daß** jede Welle (9, 10) einen eigenen Verschiebeantrieb (47) hat.

14. Walzwerk nach einem der Ansprüche 11 bis 13, **dadurch gekennzeichnet, daß** der Verschiebeantrieb (47) eine drehbare Schubstange (46) hat, welche mit der Welle (9, 10) drehfest und schub- und zugfest verbunden ist.

15. Walzwerk nach einem der Ansprüche 11 bis 14, **dadurch gekennzeichnet, daß** der Verschiebeantrieb (47) eine druckmittelbetätigte Kolben-Zylinder-Einheit ist, insbesondere ein Hydraulikzylinder mit kurzem, nur einige cm betragendem Hub.

16. Walzwerk nach einem der Ansprüche 11 bis 15 in Verbindung mit Anspruch 6 oder 7, **dadurch gekennzeichnet, daß** die Stange (27, 27 a) außerhalb der Welle (9, 10) quer geteilt ist und ihre beiden Teile (27, 27 a) durch eine drehstarre Ausgleichskupplung (50) verbunden sind, welche eine Axialverlagerung der beiden Teile (27, 27a) relativ zueinander erlaubt.

17. Walzwerk nach Anspruch 16, **dadurch gekennzeichnet, daß** die Ausgleichskupplung (50) eine Bogenzahnkupplung ist.

## Claims

1. Roll mill for raw materials in the ceramic industry having two rolls (4, 5) that define a nip (6) and that are supported by side parts (2, 3) in a standard (1) with their rotary axes in horizontal alignment,
and having two scrapers (7, 8) arranged below the rolls (4, 5), which are supported in the side parts (2, 3) for pivoting movement about shafts (9, 10) about a horizontal axis (13) extending below the mating roll, each scraper (7, 8) being associated to one of the two rolls (4, 5) and being in contact with the latter by its jacket in the active position from which it can be pivoted into a maintenance position, for which purpose pivot drives (33) are arranged on the outside of the one or the other side part (2, 3), in driving relation with the shafts, which pivot drives act between the scrapers (7, 8) and the standard (1) for pushing the scrapers (7, 8) against the rolls (4, 5) in their active position, the scrapers (7, 8) comprising a steel blade (13) mounted exchangeably in a holder (14).
**characterized in that** the holders (14) are mounted on the shafts (9, 10) by arms (17, 18), consist of a light metal and are formed from a hollow profile.

2. The roll mill as defined in Claim 1, **characterized in that** the pivot drive (33) comprises an electric servo motor.

3. The roll mill as defined in Claim 1, **characterized in that** the pivot drive (33) comprises a hydraulic vane-type cylinder.

4. The roll mill as defined in Claim 1, **characterized in that** the pivot drive (33) is a hydraulic pivoting motor having a hydraulic linear cylinder and a piston, which latter comprises a coarse-pitch threaded section which is engaged by a counter thread formed in fixed relationship on the housing of the linear cylinder.

5. The roll mill as defined in Claim 2, 3 or Claim 4, **characterized in that** the pivot drive (33) drives the shaft (9, 10) directly.

6. The roll mill as defined in any of the preceding claims, **characterized in that** the shaft (9, 10) is a hollow shaft in which is fitted a rod (27) that is in positive engagement with the shaft (9, 10) for torque transmission, and **in that** the rod (27) is in driving connection with the respective pivot drive (33).

7. The roll mill as defined in Claim 6, **characterized in that** the shaft (9, 10) is designed as a hollow cylinder, is divided at its center and provided **in that** position with flanges (23, 24) for connection of the parts one with the other, that the rod (27) exhibits a non-circular, especially a flattened cross-section in a portion (28) in the area of the flanges (23, 24),
and that a projection (31, 32) facing the non-circular section of the rod (27) projects into the interior of the hollow shaft (9, 10) from the one (24) and/or the other flange.

8. The roll mill as defined in any of the preceding claims, **characterized in that** the arms (17, 18) consist of a light metal.

9. The roll mill as defined in Claim 8, **characterized in that** the arms (17, 18) consist of a profiled material whose cross-section, viewed in parallel to the shaft (9, 10), exhibits the shape of a I or a [, the central web of the I or the [, respectively, extending transversely to the longitudinal direction of the shaft (9, 10).

10. The roll mill as defined in any of the preceding claims, **characterized in that** the holder (14) and the arms (17, 18) enclose between them an angle of between 90° and 180°.

11. The roll mill as defined in any of the preceding claims, **characterized in that** the shafts (9, 10) are supported for displacement in longitudinal direction and are connected with a translation drive (47) by means of which they can be displaced (by a lengthwise reciprocating movement).

12. The roll mill as defined in Claim 11, **characterized in that** the translation drive (47) is attached to the outside of that side part (3) where the pivot drive is not mounted.

13. The roll mill as defined in Claim 11 or Claim 12, **characterized in that** each shaft (9, 10) has its own translation drive (47).

14. The roll mill as defined in any of Claims 11 to 13, **characterized in that** the translation drive (47) comprises a rotating push rod (46) which is connected with the shaft (9, 10) in a manner fixed against torsion, thrust and tension.

15. The roll mill as defined in any of Claims 11 to 14, **characterized in that** the translation drive (47) is a fluid-operated piston-and-cylinder unit, especially a hydraulic cylinder with a short stroke in the order or a few centimeters only.

16. The roll mill as defined in any of Claims 11 to 15, in conjunction with Claim 6 or 7, **characterized in that** the rod (27, 27a) is divided in transverse direction outside of the shaft (9, 10) and that its two parts (27, 27a) are connected by a torsionally stiff flexible coupling (50) that permits axial displacement of the two parts (27, 27a) one relative to the other.

17. The roll mill as defined in Claim 16, **characterized in that** the flexible coupling (50) is a curved-tooth coupling.

## Revendications

1. Laminoir pour des matières premières destinées à l'industrie céramique comprenant deux cylindres (4, 5) délimitant un espace de serrage (6), qui sont montés avec un axe de rotation horizontal dans les parties latérales (2, 3) d'un bâti (1),
et comprenant deux racles (7, 8) disposées en dessous des cylindres (4, 5), qui sont montées dans les parties latérales (2, 3) autour d'arbres (9, 10) en pivotement autour d'un axe (13) disposé à l'horizontale en dessous du cylindre correspondant, une racle (7, 8) étant respectivement attribuée à un des deux cylindres (4, 5), venant se disposer contre la surface latérale de ce dernier dans sa position de travail et étant à même de passer par pivotement de sa position de travail à une position de maintenance, des entraînements de pivotement (33) étant prévus à cet effet sur le côté externe de l'une ou l'autre partie latérale (2, 3), en liaison d'entraînement avec les arbres, les entraînements en question agissant entre les racles (7, 8) et le bâti (1) et poussant les racles (7, 8), dans leur position de travail, contre les cylindres (4, 5), les racles (7, 8) présentant une lame (13) en acier inséré de manière amovible dans un support (14),
**caractérisé en ce que** les supports (14) sont appliqués sur les arbres (9, 10) avec des bras (17, 18), sont constitués de métal léger et sont formés pour obtenir le profil d'une chambre creuse.

2. Laminoir selon la revendication 1, **caractérisé en ce que** l'entraînement de pivotement (33) renferme un servomoteur électrique.

3. Laminoir selon la revendication 1, **caractérisé en ce que** l'entraînement de pivotement (33) renferme un cylindre hydraulique du type à rotor.

4. Laminoir selon la revendication 1, **caractérisé en ce que** l'entraînement de pivotement (33) représente un moteur de pivotement hydraulique qui présente un cylindre linéaire hydraulique comprenant un piston qui possède une section munie d'un filet de vis à pas rapide dans lequel vient s'engrener un filet de vis antagoniste monté à demeure sur le boîtier du cylindre linéaire.

5. Laminoir selon la revendication 2, 3 ou 4, **caractérisé en ce que** l'entraînement de pivotement (33) entraîne les arbres (9, 10) de manière directe.

6. Laminoir selon l'une quelconque des revendications précédentes, **caractérisé en ce que** l'arbre (9, 10) est un arbre creux dans lequel est guidée une barre (27) qui, à des fins de transmission du couple, entre en contact mécanique avec l'arbre (9, 10), et **en ce que** la barre (27) est mise en liaison d'entraînement avec l'entraînement de pivotement correspondant (33).

7. Laminoir selon la revendication 6, **caractérisé en ce que** l'arbre (9, 10) est réalisé sous la forme d'un cylindre creux, est divisé en son milieu où il est muni de brides (23, 24) à des fins de liaison réciproque, **en ce que** la barre (27) est réalisée avec une section transversale non ronde, en particulier aplatie, dans sa section (28) située dans la zone des brides (23, 24), et **en ce que**, par rapport à la première bride (24) et/ou l'autre bride, une protubérance (31, 32), orientée en direction de la section non ronde de la barre (27), fait saillie à l'intérieur de l'arbre creux (9, 10).

8. Laminoir selon l'une quelconque des revendications précédentes, **caractérisé en ce que** les bras (17, 18) sont constitués d'un métal léger.

9. Laminoir selon la revendication 8, **caractérisé en ce que** les bras (17, 18) sont constitués d'une matière profilée dont la section transversale parallèle à l'arbre possède la forme d'un I ou la forme d'un [ , la branche médiane du I respectivement du [ s'étendant transversalement par rapport à la direction longitudinale de l'arbre (9, 10).

10. Laminoir selon l'une quelconque des revendications précédentes, **caractérisé en ce que** le support (14) forme avec les bras (17, 18) un angle qui s'élève entre 90° et 180°.

11. Laminoir selon l'une quelconque des revendications précédentes, **caractérisé en ce que** les arbres (9, 10) sont montés en mobilité dans leur direction longitudinale et sont reliés à un entraînement de déplacement (47) par lequel ils sont en mesure de se déplacer (en effectuant un mouvement alternatif en direction longitudinale).

12. Laminoir selon la revendication 11, **caractérisé en ce que** l'entraînement de déplacement (47) est appliqué sur le côté externe de la partie latérale (3), sur lequel n'est pas appliqué l'entraînement de pivotement (33).

13. Laminoir selon la revendication 11 ou 12, **caractérisé en ce que** chaque arbre (9, 10) possède un entraînement de déplacement propre (47).

14. Laminoir selon l'une quelconque des revendications 11 à 13, **caractérisé en ce que** l'entraînement de déplacement (47) possède une barre de poussée rotative (46) qui est reliée en antirotation à l'arbre (9, 10) et également d'une manière résistant à la poussée et à la traction.

15. Laminoir selon l'une quelconque des revendications 11 à 14, **caractérisé en ce que** l'entraînement de déplacement (47) est une unité du type à piston-cylindre entraînée par un moyen de pression, en particulier un cylindre hydraulique possédant une courte course, s'élevant à seulement quelques centimètres.

16. Laminoir selon l'une quelconque des revendications 11 à 15 en liaison avec la revendication 6 ou 7, **caractérisé en ce que** la barre (27, 27a) est coupée en direction transversale à l'extérieur de l'arbre (9, 10), ses deux parties (27, 27a) étant reliées via un accouplement de compensation (50) qui permet aux deux parties (27, 27a) d'effectuer un déplacement en direction axiale, l'une par rapport à l'autre.

17. Laminoir selon la revendication 16, **caractérisé en ce que** l'accouplement de compensation (50) est un accouplement du type à dent arrondie.
